# EUROPÄISCHE PATENTSCHRIFT

(11) **EP 2 575 547 B1**
(45) Veröffentlichungstag und Bekanntmachung des Hinweises auf die Patenterteilung: **28.11.2018**
(21) Anmeldenummer: 11725621.4
(22) Anmeldetag: 31.05.2011
(51) Int. Cl.: A47B 88/40, A47B 88/427, A47B 88/90

(54) **VERBINDUNGSVORRICHTUNG UND SCHUBLADE MIT EINER VERBINDUNGSVORRICHTUNG**
CONNECTING DEVICE AND DRAWER HAVING A CONNECTING DEVICE
DISPOSITIF DE LIAISON ET TIROIR DOTÉ D'UN DISPOSITIF DE LIAISON

(30) Priorität: 31.05.2010 DE 202010007428 U
(43) Veröffentlichungstag der Anmeldung: 10.04.2013
(73) Patentinhaber: Grass GmbH, 6973 Höchst (AT)
(72) Erfinder: HENSCHEID, Heinz-Josef, 53809 Ruppichteroth (DE); HIRTSIEFER, Artur, 53819 Neunkirchen (DE); RÖDDER, Bernd, 53809 Ruppichteroth (DE); SCHNELL, Jürgen, 53797 Lohmar (DE); SCHMIDT, Klaus-Dieter, 51588 Nümbrecht (DE)
(74) Vertreter: Otten, Roth, Dobler & Partner mbB Patentanwälte
(86) Internationale Anmeldenummer: PCT/EP2011/002677
(87) Internationale Veröffentlichungsnummer: WO 2011/151052

(56) Entgegenhaltungen:
- EP-A2- 1 645 211
- WO-A2-2009/006651

## Beschreibung

### Stand der Technik:

Im Möbelbereich sind für den Zusammenbau von Schubladenwandelementen unterschiedliche Verbindungsvorrichtungen bekannt.

Bei Schubladenwandelementen aus Holz werden beispielsweise einfache Klebe- bzw. Zapfenverbindungen realisiert.

Die verbundenen Wandelemente einer Schublade bilden zumindest einen Teil einer Schubladenwand der Schublade, wobei die Schubladenwand je nach Position an der Schublade eine Frontwand, eine Rückwand und in der Regel zwei Seitenwände umfassen kann.

Die EP 1 645 211 A2 betrifft eine Stabilisierungsvorrichtung für Möbelteile, insbesondere für eine an einem Fachboden montierte Frontblende, die im montierten Zustand zueinander bewegbar sind, wobei die Stabilisierungsvorrichtung zumindest eine erste Montagestelle zur Befestigung am ersten Möbelteil und zumindest eine zweite Montagestelle zur Befestigung am zweiten Möbelteil aufweist, wobei zwischen den ersten und Montagestellen ein flexibler Mittelteil angeordnet ist.

### Aufgabe und Vorteile der Erfindung:

Aufgabe der vorliegenden Erfindung ist es, eine technisch intelligente und wirtschaftlich vorteilhafte Verbindungsart für Schubladen bereitzustellen.

Diese Aufgabe wird durch die unabhängigen Ansprüche gelöst.

Die Erfindung geht aus von einer Vorrichtung zum Verbinden von Wandelementen einer Schublade, wobei die Wandelemente im verbundenen Zustand zumindest einen Teil einer Schubladenwand der Schublade bilden und wobei die Schubladenwand eine Frontwand, eine Rückwand und/oder wenigstens eine Seitenwand umfasst. Für die Verbindung der zu verbindenden Wandelemente ist ein plattenförmiger Verbindungsadapter mit Eingreifmitteln vorgesehen, welche für die Verbindung sowohl mit einer Stirnseite eines ersten zu verbindenden Wandelements als auch mit einer Hauptseite eines zweiten zu verbindenden Wandelements zusammenwirken, wobei der Verbindungsadapter in seiner Haupterstreckungsrichtung an der Stirnseite und der Hauptseite anliegt. Damit kann eine Verbindung von Wandelementen besonders Platz sparend bzw. kompakt ausgebildet werden. Außerdem ist eine äußerst stabile Verbindung mit dem plattenförmigen Verbindungsadapter bereitgestellt. Denn der flache bzw. in seiner Grundform als Platte ausgebildeter Verstelladapter kann vergleichsweise flächensteif sein. Durch das flächige Anliegen des Verbindungsadapters an der Stirn- und der Hauptseite der zu verbindenden Wandelemente können hohe Verbindungskräfte aufgenommen werden.

Der Verbindungsadapter kann im fest fixierten Zustand versteifend in dem von ihm bedeckten Abschnitt der Wandelemente wirken. Außerdem kann über einen plattenförmigen Verbindungsadapter eine Vielzahl von Verbindungsstellen realisiert werden, die punkt-, linien- oder flächenförmig zwischen dem Verbindungsadapter und Abschnitten der zu verbindenden Wandelemente einrichtbar sind. Bevorzugt ist der Verstelladapter anliegend an der Stirnseite des einen Wandelements und anliegend an der Hauptseite des anderen Wandelements vorhanden. Idealerweise ist die Stirnseite fluchtend oder zumindest nahezu fluchtend, d. h. mit einem ggf. nur sehr geringfügigen Versatz zur Hauptseite vorhanden. Im Falle eines Versatzes kann die Höhe des Versatzes in etwa der Dicke des Verstelladapters entsprechen. Der Versatz kann Anschlagabschnitte bereitstellen bzw. als Positionierhilfe für eine positionsrichtige Anbringung des Verstelladapters an den Wandelementen dienen, so dass eine exakt richtige Anbringposition des Verstelladapters leicht möglich ist bzw. eine Fehlpositionierung ausgeschlossen werden kann.

Als Stirnseite ist insbesondere eine bezogen auf die Schublade vordere oder rückwärtige Schmalseite eines länglichen schmalen Seitenwandelements zu verstehen. Eine Hauptseite kann eine im Wesentlichen flächige bzw. eine Flächenseite sein oder die Hauptseite ist offen bzw. profiliert mit zueinander versetzt vorhandenen Abschnitten, die dann keine flächig geschlossenen Seite bilden. Als Hauptseite kommt insbesondere eine Außenseite einer Rückwand der Schublade in Frage. Es ist aber nicht ausgeschlossen, dass die Hauptseite eine nach vorne zu einer Bedienseite der Schublade gerichtete Außenseite eines Frontwandelements ist. Dabei kann der Verstelladapter zum Beispiel in einem zurückspringenden Bereich versenkt bzw. bündig zu anschließenden Bereichen angesetzt sein, so dass vorteilhafterweise dessen Außenseite nicht über benachbarte Abschnitte einer vorderen Stirnseite des verbundenen Seitenwandelements übersteht.

Erfindungsgemäß ist für die Verbindung der zu verbindenden Wandelemente ein Verbindungsadapter vorgesehen, wobei der Verbindungsadapter einen Verstellmechanismus aufweist, mit welchem eine Einstellung der Relativposition der Schublade gegenüber einer Führungseinheit in einem Zustand vornehmbar ist, in welchem die Schublade über die Führungseinheit an einem Korpus bewegbar aufgenommen ist. So kann mit dem Verbindungsadapter neben der Verbindungsfunktion eine zusätzliche Funktion realisiert werden. Denn vorteilhafterweise kann mit einem für den Zusammenbau von Schubladen ohnehin notwendigen Bauteil bzw. dem Verbindungsadapter ein Verstellmechanismus integriert sein. Vorteilhafterweise kann mit dem Verstelladapter, der sowohl Verbindungsaufgaben als auch die Einstellfunktion erfüllt, auf ein weiteres Teil mit Verstellfunktion verzichtet werden. Die Zahl der Bauteile wird damit verringert und der Zusammenbau wird erleichtert.

Eine Einstellung der Schublade relativ zur Führungseinheit kann z. B. aufgrund eines gewünschten Erscheinungsbildes des Möbels mit der Schublade bzw. für ein Laufverhalten der Schublade von Bedeutung sein. Die Verstellung der Schublade relativ zur Führungseinheit kann beispielsweise um wenige Millimeter bzw. um wenige Winkelgrade erfolgen.

Es wird weiter vorgeschlagen, dass der Verbindungsadapter für eine Verbindung von aus Profilmaterial bestehenden Wandelementen ausgebildet ist. Bei modernen Möbelteilen bzw. Schubladen können Wandelemente aus einem profilierten Material bestehen, beispielsweise aus einem Metall- oder Kunststoffmaterial. Gegenüber z. B. Wänden aus Holz sind profilierte Wände teilweise oder im Wesentlichen hohl bzw. mit Materialaussparungen versehen. Der vorgeschlagene Verbindungsadapter ist vorteilhafterweise geeignet, Wandelemente zu verbinden, welche aus einem Profilmaterial bestehen. Denn der Verbindungsadapter ist auf die Profile abgestimmt, um eine mechanisch stabile und variable Verbindung mit dem Verbindungsadapter von miteinander zu verbindenden Wandelementen zu ermöglichen. Insbesondere ist der Verbindungsadapter so auf das Profil abgestimmt, dass immer eine sichere Verankerung des Verbindungsadapters mit Gegenabschnitten bzw. Verankerungsabschnitten am Wandprofil möglich ist, zum Beispiel mit Eingreifmitteln wie Schrauben zur Fixierung des Verbindungsadapters bzw. der Verbindung der zu verbindenden Wandelemente. Insbesondere wird vermieden, dass die Eingreifmittel an Stellen eingebracht werden, die dazu nicht geeignet sind, beispielsweise in einem Hohlabschnitt des Profils nicht ausreichend Halt finden bzw. zumindest teilweise ins Leere greifen und so keine ausreichend stabile Verbindung zustande kommt.

Vorteilhafterweise ist der Verbindungsadapter für eine Verbindung der Wandelemente in einem von den zu verbindenden Wandelementen gebildeten Eckbereich der Schublade ausgebildet. In einem Eckbereich der Schublade können zu verbindende Wandelemente besonders vorteilhaft verbunden werden. Denn dort laufen die beiden miteinander zu verbindenden Wandelemente zusammen bzw. gelangen in Kontakt miteinander oder sind nur wenig voneinander beabstandet. Bevorzugt ist der Verbindungsadapter derart ausgebildet, auftretende Kräfte, welche in unterschiedlichen Richtungen wirken können, aufzunehmen bzw. abzuleiten. Solche in verschiedenen Richtungen wirkende Kräfte und Momente können insbesondere aufgrund der im Eckbereich aufeinander zulaufenden Wandelemente vom dort angebrachten Verbindungsadapter vorteilhaft aufgenommen und die Verbindung der Wandelemente besonders sicher und stabil eingerichtet werden. Der Verbindungsadapter kann sich beispielsweise über die gesamte Höhe der Stirnseite einer Seitenwand und über eine dazu entsprechende Abmessung über einen Teil der Breite einer Hauptseite einer Rückwand erstrecken.

Es ist überdies vorteilhaft, dass am Verbindungsadapter die Eingreifmittel versetzbar aufgenommen sind, um den Verbindungsadapter in unterschiedlichen Anbringpositionen an den zu verbindenden Wandelementen fixieren zu können. Die Eingreifmittel, zum Beispiel Schraubenmittel, bewirken die Verankerung des Verbindungsadapters an den jeweiligen Wandelementen, also eine feste Verbindung stirnseitig am einen Wandelement und hauptflächenseitig am anderen Wandelement. Die Eingreifmittel können beispielsweise verschieb- oder versetzbar relativ zum Verbindungsadapter ausgebildet sein, insbesondere durch eine Öffnung im Verbindungsadapter durchgreifen. So lassen sich die Eingreifmittel in den entsprechenden Wandelementen verankern und eine Klemmwirkung erzielen, wobei der Verbindungsadapter vor dem Festklemmen in seiner Position relativ zu den Wandelementen verstellbar ist, um in einer gewünschten Anbringposition über die Eingreifmittel fest fixiert an die entsprechenden Abschnitte der zu verbindenden Wandelemente angedrückt zu werden.

Eine vorteilhafte Modifikation des Erfindungsgegenstandes zeichnet sich dadurch aus, dass die Eingreifmittel Aufsteckmittel zur losen Halterung des Verbindungsadapters an Gegenabschnitten der zu verbindenden Wandelemente umfassen. Die Aufsteckmittel sind insbesondere positionsfest zum Beispiel ggf. einheitlich ausgebildet am Verbindungsadapter vorhanden. So kann ein Verbindungsadapter auch in einer noch nicht fest verschraubten bzw. verbundenen Position an den Wandelementen vorfixiert bzw. gehalten werden. Der Verbindungsadapter muss später zum eigentlichen Verbinden nur noch wenig versetzt bzw. in die exakt passende Position gebracht werden. Der Verbindungsadapter kann bereits vor dem Zusammenbau der Wandelemente insbesondere unverlierbar und geschützt am Gegenabschnitt zum Beispiel einem Verankerungsabschnitt des Wandelements angeordnet werden. Besonders vorteilhaft ist es, wenn mit den Aufsteckmitteln ein Verschieben des Verbindungsadapters entlang der Gegenabschnitte ermöglicht wird.

Es ist außerdem von Vorteil, dass der Verbindungsadapter als separates Teil mit einem Grundkörper und einem daran linear bewegbaren Stellglied des Verstellmechanismus ausgestaltet ist. Der Verbindungsadapter ist damit platzsparend bauend und einfach ausgestaltet.

Weiter ist es vorteilhaft, dass das Stellglied durch Betätigung eines bewegbar gelagerten Betätigungselements drehverstellbar ist, insbesondere durch eine werkzeuglose und/oder manuelle Betätigung. So kann jederzeit durch Einwirken auf das Betätigungselement das Stellglied in eine gewünschte Position gebracht und damit eine Einstellung der Relativposition der Schublade gegenüber der Führungseinheit in einem verbundenen Zustand mit der Führungseinheit vorgenommen werden. Insbesondere ist die Einstellung der Relativposition stufenlos bzw. feinstufig möglich.

Weiter ist es dabei von Vorteil, dass ein selbsthemmender Mechanismus für eine Sicherung einer eingestellten Position des Stellgliedes vorhanden ist. So bleibt eine gewählte Einstellposition auch bei auftretenden Vibrationen durch die Bewegung der Schublade dauerhaft erhalten.

Weiter wird vorgeschlagen, dass der Verstellmechanismus über eine Exzenteranordnung verfügt, mit der unterschiedliche Verstellpositionen des Verstellmechanismus einrichtbar sind. Eine Exzenteranordnung ist eine vergleichsweise stabile und Platz sparende Anordnung, um einen Verstellmechanismus zu realisieren.

Weiter wird vorgeschlagen, dass an den zu verbindenden Wandelenten jeweils ein vorbereiteter Verankerungsabschnitt mit einem Eingreifabschnitt vorhanden ist, in dem die Eingreifmittel verankerbar sind, wobei in einer zur Verbindung positionsrichtigen Ausrichtung der Wandelemente die Eingreifabschnitte sich in eine gemeinsame Richtung erstrecken. So können die Eingreifmittel beispielsweise von einem Monteur schnell und unkompliziert eingebracht werden, zum Beispiel alle Eingreifmittel von einer Seite aus eingebracht werden.

Die Erfindung bezieht sich außerdem auf eine Schublade mit einer Schubladenwand aus miteinander verbundenen Wandelementen, wobei die Schubladenwand eine Frontwand, eine Rückwand und/oder wenigstens eine Seitenwand umfasst. Vorteilhafterweise ist eine der beschriebenen Vorrichtungen vorgesehen. Damit lassen sich an einer Schublade die oben genannten erläuterten Vorteile realisieren.

Bevorzugt sind die Wandelemente miteinander durch stumpfes Anstoßen einer Stirnseite eines Wandelements an eine Hauptseite eines angrenzenden Wandelements verbunden. So kann die Schublade einfach zusammengebaut werden.

### Figurenbeschreibung:

Weitere Vorteile und Merkmale der Erfindung werden anhand eines erfindungsgemäßen Ausführungsbeispiels näher erläutert.

Im Einzelnen zeigt:
- Figur 1: eine perspektivische Rückansicht einer Grundplatte eines erfindungsgemäßen Verbindungsadapters,
- Figur 2: der Verbindungsadapter aus Figur 1 in einer Rückansicht,
- Figur 3: die Grundplatte gemäß Figur 1 und 2 mit daran angeordnetem Stellglied in perspektivischer Vorderansicht,
- Figur 4: die Anordnung gemäß Figur 3 in einer Rückansicht,
- Figur 5: eine perspektivische Teilansicht auf einen Eckbereich einer erfindungsgemäßen Schublade, welcher über einen erfindungsgemäßen Verbindungsadapter verbunden ist und
- Figur 6: die Anordnung gemäß Figur 5 in einer weiteren perspektivischen Ansicht.

Ein als Verstelladapter 1 ausgebildeter erfindungsgemäßer Verbindungsadapter dient zur Verbindung einer Seitenwand 18 mit einer Rückwand 19 einer Schublade.

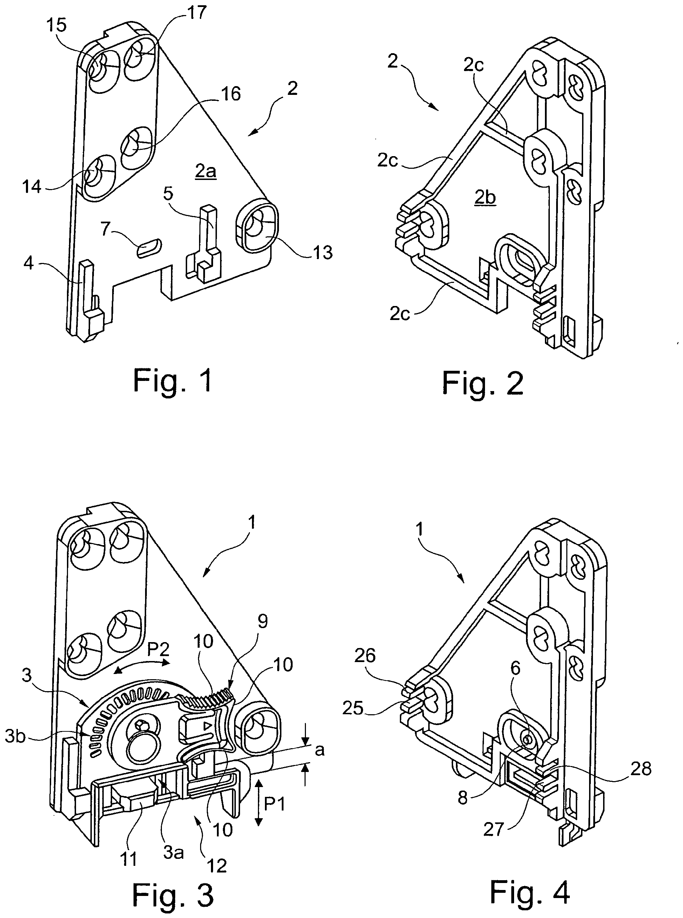

Figur 3 und Figur 4 zeigt in perspektivischer Vorder- und Rückansicht den Verstelladapter 1 in Einzelansicht. Der Verstelladapter 1, hier aus Kunststoff bestehend, umfasst eine Grundplatte 2 (siehe Figur 1 und 2) mit einer Vorderseite 2a und einer Rückseite 2b, die im angebrachten Zustand des Verstelladapters 1 den zu verbindenden Wandelementen 18, 19 zugewandt ist. Die Rückseite 2b des Verstelladapters 1 ist für eine leichte Bauweise bzw. zur Versteifung mit Anlagestegen 2c versehen, die randseitig vorhanden und teils nach innen geführt sind.

An der Vorderseite 2a der Grundplatte 2 ist ein Verstellteil 3 verschiebbar aufgenommen, zum Beispiel um die Strecke a bzw. wenige Millimeter, hier um ca. 5 Millimeter gemäß Doppelpfeil P1 (Figur 3), das zur Einstellung einer Relativposition einer Schublade gegenüber einer Führungseinheit (nicht gezeigt) dient, über welche die Schublade an einem Möbelkorpus befestigbar ist.

Zum positionsrichtigen Anbringen und zur Halterung des Verstellteils 3 an der Grundplatte 2 sind an dieser vorderseitig zwei Aufnahmestege 4 und 5 vorgesehen, zwischen denen das Verstellteil 3 in seitlicher Richtung fixiert und quer dazu und nach oben und unten relativ zur Grundplatte 2 gemäß des Doppelpfeils P1 verschiebbar ist. Am Verstelladapter 1 greift ein Stift 6 des Verstellteils 3 durch ein Langloch 7 in der Grundplatte 2. Der Stift 6 ist auf der Rückseite 2b gegen ein Herausrutschen aus dem Langloch 7 über eine Sicherungsscheibe 8 gesichert. Über den Stift 6 ist ein Verstellhebel 9 exzentrisch um ca. 180 Winkelgrade drehbar an der Grundplatte 2 gelagert. Der Verstellhebel 9 weist eine geriffelte Greifkontur 10 mit drei gebogenen Abschnitten für eine manuelle Bedienung des Verstellhebels 9 auf, so dass der Verstellhebel 9 gemäß des Doppelpfeils P2 (Figur 3) gegenüber der Grundplatte 2 verschwenkt werden kann. Mit dem Verschwenken ist eine Verstellung des Verstellteils 3 gemäß des Doppelpfeils P1 gekoppelt, was unter Verschiebung des Stiftes 6 entlang des Langlochs 7 erfolgt. Figur 3 zeigt die am weitesten nach oben verschobene Stellung des Verstellteils 3.

Am Verstellteil 3 ist ein Auflagesockel 11 und darüber eine Öffnung 3a vorhanden, in welche eine umgebogene Haltenase an einem hinteren Ende einer Bewegungsschiene der Führungseinheit (nicht dargestellt) zur Verbindung der Bewegungsschiene an der Schublade eingreifen kann. Wird das Verstellteil 3 beispielsweise nach unten verfahren, durch Verschwenken des Verstellhebels 9 aus der gezeigten Position in Richtung entgegen dem Uhrzeigersinn, kann die betreffende Schublade relativ zur Bewegungsschiene angehoben werden. Die Bewegungsschiene ist dabei oben und jeweils seitlich umgriffen von einer nach unten offenen U-förmigen Nut einer Aufnahme 12 unten am Stellteil 3.

Zur Sicherung des Verstellhebels 9 bzw. des Verstellteils 3 in einer eingestellten Stellung greift eine nicht ersichtliche etwas federnd bewegbare Rastnase am Verstellhebel 9 in eine von einer Mehrzahl von gleichartigen beabstandeten Einrastvertiefungen eines Verrastungsprofils 3b am Verstellteil 3.

Zur Fixierung der Grundplatte 2 bzw. des Verstelladapters 1 an den zu verbindenden Wandelementen sind Doppellöcher 13 bis 17 am Verstelladapter 1 vorgesehen. Durch die Doppellöcher 13 bis 17 können in den Figuren 1 bis 4 nicht dargestellte Eingreif- bzw. Fixiermittel wie beispielsweise Schrauben von der Vorderseite 2a her durchgeführt und in den Wandelementen verankert werden. Die Doppellöcher 13 bis 17 ermöglichen jeweils zwei geringfügig in Richtung einer Höhenabmessung der Wandelemente versetzte Einsteckpositionen für die Eingreifmittel.

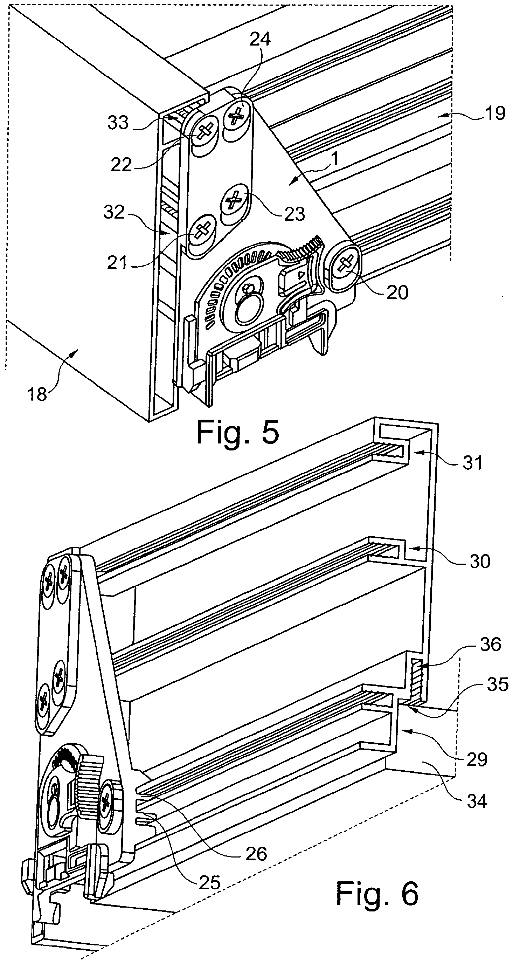

Figur 5 und 6 zeigt den Verstelladapter 1 gemäß Figur 3 und 4 im an der Seitenwand 18 und der Rückwand 19 angebrachten und verbindenden Zustand. Dargestellt sind hier auch die Eingreifmittel, welche Kreuzschlitzschrauben 20 bis 24 zur Fixierung und Verbindung der Wandelemente 18 und 19 umfassen.

Der Verstelladapter 1 weist auf der Rückseite 2b außerdem senkrecht dazu ausgerichtete, fest vorhandene, vorstehende Eingreifmittel auf, welche Einstecknasen 25, 26 bzw. 27, 28 aufweisen. Weitere Eingreifmittel oberhalb und unterhalb der Einstecknasen 25 bis 28 sind nicht weiter erläutert, diese dienen aber ebenfalls zur positionsrichtigen Anordnung des Verstelladapters 1 an zu verbindenden Wandelementen bzw. im gezeigten Beispiel am Wandelement 19. Die Einstecknasen 25 bis 28 greifen in einen passend zu den Einstecknasen 25 bis 28 ausgebildeten Verankerungsabschnitt 29, der sich in Längsrichtung auf der rückwärtigen Seite an der Rückwand 19 erstreckt.

Weiter oben auf der rückwärtigen Seite an der Rückwand 19 verlaufen weitere Verankerungsabschnitte 30 und 31, die in etwa mittig und am oberen Rand längs an der Rückwand 19 verlaufen.

Alle Verankerungsabschnitte 29 bis 31 weisen über die gesamte Breite der Rückwand 19 zumindest eine durchgehend bzw. ununterbrochen verlaufende U-förmige Nut bzw. zwei parallel verlaufende stegartig vorspringende Abschnitte auf. Der Verankerungsabschnitt 29 umfasst drei stegartige Vorsprünge mit einer schmaleren U-förmigen Nut mit Riffelung, die insbesondere auch geeignet ist, eine Verankerung durch Einschrauben einer Schraube zu ermöglichen, und einer weiteren breiteren darunter vorhandenen U-förmigen Nut.

Im verbundenen Zustand gemäß Figur 5 und 6 greift die Kreuzschlitzschraube 20 in den Verankerungsabschnitt 29, die Kreuzschlitzschraube 23 in den Verankerungsabschnitt 30 und die Kreuzschlitzschraube 24 in den Verankerungsabschnitt 31 in der Rückwand 19, jeweils quer zur Längserstreckung der Verankerungsabschnitte 29, 30 und 31.

Die Kreuzschlitzschrauben 21 und 22 greifen in entsprechende Verankerungsabschnitte 32 und 33 (Figur 5) in der Seitenwand 18, jedoch in Richtung einer Längserstreckung der Verankerungsabschnitte 32 und 33.

Außerdem ist ein Bodenelement 34 der Schublade vorgesehen, welches an einem rechtwinkligen Absatz 35 der Rückwand 19 anstoßend anliegt. Verbindungselemente bzw. Verbindungsschrauben zur Fixierung des Bodenelements 34 an der Rückwand 19 sind nicht dargestellt. Solche Befestigungsschrauben greifen durch das Bodenelement durch in einen weiteren Verankerungsabschnitt 36 an der Rückwand 19. Der Verankerungsabschnitt 36 ist ebenfalls als U-förmige Nut mit zwei parallelen Stegen über die gesamte Breite der Rückwand 19 ausgebildet. Die U-förmige Nut des Verankerungsabschnitt 36 ist jedoch anders orientiert als die Verankerungsabschnitte 29 bis 31, hier um 90 Grad nach unten gedreht bzw. nach unten offen.

### Bezugszeichenliste:

- 1: Verstelladapter
- 2: Grundplatte
- 2a: Vorderseite
- 2b: Rückseite
- 2c: Anlagesteg
- 3: Verstellteil
- 3a: Öffnung
- 3b: Verrastungsprofil
- 4: Aufnahmesteg
- 5: Aufnahmesteg
- 6: Stift
- 7: Langloch
- 8: Sicherungsscheibe
- 9: Verstellhebel
- 10: Eingreifkontur
- 11: Auflagesockel
- 12: Aufnahme
- 13 - 17: Doppelloch
- 18: Seitenwand
- 19: Rückwand
- 20 - 24: Kreuzschlitzschraube
- 25, 26: Einstecknase
- 27, 28: Einstecknase
- 29 - 33: Verankerungsabschnitt
- 34: Bodenelement
- 35: Absatz
- 36: Verankerungsabschnitt

## Patentansprüche

1. Vorrichtung zum Verbinden von Wandelementen (18, 19) einer Schublade, wobei die Wandelemente (18, 19) im verbundenen Zustand zumindest einen Teil einer Schubladenwand der Schublade bilden und wobei die Schubladenwand eine Frontwand, eine Rückwand und/oder wenigstens eine Seitenwand umfasst, wobei für die Verbindung der zu verbindenden Wandelemente (18, 19) ein plattenförmiger Verbindungsadapter (1) mit Eingreifmitteln (20-24, 25-28) vorgesehen ist, welche für die Verbindung sowohl mit einer Stirnseite eines ersten zu verbindenden Wandelements (18) als auch mit einer Hauptseite eines zweiten zu verbindenden Wandelements (19) zusammenwirken, wobei der Verbindungsadapter (1) in seiner Haupterstreckungsrichtung an der Stirnseite und der Hauptseite anliegt, **dadurch gekennzeichnet, dass** der Verbindungsadapter einen Verstellmechanismus aufweist, mit welchem eine Einstellung der Relativposition der Schublade gegenüber einer Führungseinheit in einem Zustand vornehmbar ist, in welchem die Schublade über die Führungseinheit an einem Korpus bewegbar aufgenommen ist.

2. Vorrichtung nach Anspruch 1, **dadurch gekennzeichnet, dass** der Verbindungsadapter (1) für eine Verbindung von aus Profilmaterial bestehenden Wandelementen (18, 19) ausgebildet ist.

3. Vorrichtung nach einem der vorhergehenden Ansprüche, **dadurch gekennzeichnet, dass** der Verbindungsadapter (1) für eine Verbindung der Wandelemente (18, 19) in einem von den zu verbindenden Wandelementen (18, 19) gebildeten Eckbereich der Schublade ausgebildet ist.

4. Vorrichtung nach einem der vorhergehenden Ansprüche, **dadurch gekennzeichnet, dass** am Verbindungsadapter (1) die Eingreifmittel (20-24) versetzbar aufgenommen sind, um den Verbindungsadapter (1) in unterschiedlichen Anbringpositionen an den zu verbindenden Wandelementen (18, 19) fixieren zu können.

5. Vorrichtung nach einem der vorhergehenden Ansprüche, **dadurch gekennzeichnet, dass** die Eingreifmittel (25-28) Aufsteckmittel zur losen Halterung des Verbindungsadapters (1) an Gegenabschnitten der zu verbindenden Wandelemente (18, 19) umfassen.

6. Vorrichtung nach einem der vorhergehenden Ansprüche, **dadurch gekennzeichnet, dass** der Verbindungsadapter (1) als separates Teil mit einem Grundkörper (2) und einem daran linear bewegbaren Stellglied (3) des Verstellmechanismus ausgestaltet ist.

7. Vorrichtung nach Anspruch 6, **dadurch gekennzeichnet, dass** das Stellglied (3) durch Betätigung eines bewegbar gelagerten Betätigungselements (9) verstellbar ist, insbesondere durch eine werkzeuglose und/oder manuelle Betätigung.

8. Vorrichtung nach einem der vorhergehenden Ansprüche 6 oder 7, **dadurch gekennzeichnet, dass** ein selbsthemmender Mechanismus für eine Sicherung einer eingestellten Position des Stellgliedes (3) vorhanden ist.

9. Vorrichtung nach einem der vorhergehenden Ansprüche, **dadurch gekennzeichnet, dass** der Verstellmechanismus über eine Exzenteranordnung verfügt, mit der unterschiedliche Verstellpositionen des Verstellmechanismus einrichtbar sind.

10. Vorrichtung nach einem der vorhergehenden Ansprüche, **dadurch gekennzeichnet, dass** an den zu verbindenden Wandelementen (18, 19) jeweils ein vorbereiteter Verankerungsabschnitt (29-33) mit einem Eingreifabschnitt vorhanden ist, in dem die Eingreifmittel (20-24, 25-28) verankerbar sind, wobei in einer zur Verbindung positionsrichtigen Ausrichtung der Wandelemente (18, 19) die Eingreifabschnitte sich in eine gemeinsame Richtung erstrecken.

11. Schublade mit einer Schubladenwand aus miteinander verbundenen Wandelementen (18, 19), wobei die Schubladenwand eine Frontwand, eine Rückwand und/oder wenigstens eine Seitenwand umfasst, **dadurch gekennzeichnet, dass** eine Vorrichtung nach einem der vorhergehenden Ansprüche vorgesehen ist.

12. Schublade nach Anspruch 11, **dadurch gekennzeichnet, dass** die Wandelemente (18, 19) miteinander durch stumpfes Anstoßen einer Stirnseite eines Wandelements (19) an eine Hauptseite eines angrenzenden Wandelements (18) verbunden sind.

## Claims

1. Device for connecting wall elements (18, 19) of a drawer, wherein the wall elements (18, 19) in the connected state form at least a portion of a wall of the drawer, and wherein the drawer wall comprises a front wall, a rear wall and/or at least one side wall, wherein a plate-like connecting adapter (1) with engagement means (20-24, 25-28) is provided for connecting the wall elements (18, 19) to be connected, said engagement means interacting, for connecting purposes, both with an end side of a first wall element (18) to be connected and with a main side of a second wall element (19) to be connected, wherein the connecting adapter (1) in its main extension direction bears against the end side and the main side,
**characterised in that** the connecting adapter has an adjusting mechanism by means of which it is possible to adjust the position of the drawer relative to a guide unit in a situation in which the drawer is mounted on a basic structure in a movable manner by means of the guide unit.

2. Device according to claim 1, **characterised in that** the connecting adapter (1) is designed for connecting wall elements (18, 19) made from a profile material.

3. Device according to any of the preceding claims, **characterised in that** the connecting adapter (1) is designed for connecting the wall elements (18, 19) in a corner area of the drawer formed by the wall elements (18, 19) to be connected.

4. Device according to any of the preceding claims, **characterised in that** the engagement means (20-24) are accommodated on the connecting adapter (1) in a displaceable manner in order to be able to fix the connecting adapter (1) in different attachment positions on the wall elements (18, 19) to be connected.

5. Device according to any of the preceding claims, **characterised in that** the engagement means (25-28) comprise plug-on means for loosely retaining the connecting adapter (1) on counterpart portions of the wall elements (18, 19) to be connected.

6. Device according to any of the preceding claims, **characterised in that** the connecting adapter (1) is configured as a separate part with a basic body (2) and an actuator (3) of the adjusting mechanism which can be moved linearly on the basic body.

7. Device according to claim 6, **characterised in that** the actuator (3) can be adjusted by actuating a movably mounted actuating element (9), in particular by tool-free and/or manual actuation.

8. Device according to any of the preceding claims 6 or 7, **characterised in that** a self-locking mechanism is provided for securing an adjusted position of the actuator (3).

9. Device according to any of the preceding claims, **characterised in that** the adjusting mechanism has an eccentric arrangement by means of which different adjustment positions of the adjusting mechanism can be set.

10. Device according to any of the preceding claims, **characterised in that** a prepared anchoring section (29-33) with an engagement section, in which the engagement means (20-24, 25-28) can be anchored, is provided respectively on the wall elements (18, 19) to be connected, wherein with the wall elements (18, 19) oriented correctly for connection, the engagement sections extend in a common direction.

11. Drawer comprising a drawer wall made of interconnected wall elements (18, 19), wherein the drawer wall comprises a front wall, a rear wall and/or at least one side wall, **characterised in that** a device is provided according to any of the preceding claims.

12. Drawer according to claim 11, **characterised in that** wall elements (18, 19) are connected to one another by means of an end side of one wall element (19) abutting flush against a main side of an adjacent wall element (18).

## Revendications

1. Dispositif pour relier des éléments de paroi (18, 19) d'un tiroir, les éléments de paroi (18, 19) formant à l'état relié au moins une partie d'une paroi de tiroir du tiroir, et la paroi de tiroir comprenant une paroi de façade, une paroi arrière et/ou au moins une paroi latérale, un adaptateur de liaison (1) en forme de plaque comprenant des moyens d'engagement (20-24, 25-28) étant prévu pour relier les éléments de paroi (18, 19) à relier, lesquels moyens d'engagement coopèrent pour la liaison aussi bien avec une face frontale d'un premier élément de paroi (18) à relier qu'avec une face principale d'un deuxième élément de paroi (19) à relier, l'adaptateur de liaison (1) reposant dans sa direction d'extension principale contre la face frontale et la face principale, **caractérisé en ce que** l'adaptateur de liaison est muni d'un mécanisme de réglage à l'aide duquel il est possible d'effectuer un réglage de la position relative du tiroir par rapport à une unité de guidage dans un état dans lequel le tiroir est reçu mobile sur un caisson par le biais de l'unité de guidage.

2. Dispositif selon la revendication 1, **caractérisé en ce que** l'adaptateur de liaison (1) est conçu pour relier des éléments de paroi (18, 19) constitués d'un matériau profilé.

3. Dispositif selon l'une des revendications précédentes, **caractérisé en ce que** l'adaptateur de liaison (1) est conçu pour relier les éléments de paroi (18, 19) dans une zone d'angle du tiroir formée par les éléments de paroi (18, 19) à relier.

4. Dispositif selon l'une des revendications précédentes, **caractérisé en ce que** les moyens d'engagement (20-24) sont reçus de manière déplaçable sur l'adaptateur de liaison (1) afin de pouvoir fixer l'adaptateur de liaison (1) sur les éléments de paroi (18, 19) à relier dans différentes positions de montage.

5. Dispositif selon l'une des revendications précédentes, **caractérisé en ce que** les moyens d'engagement (25-28) comprennent des moyens enfichables pour le maintien lâche de l'adaptateur de liaison (1) sur des portions conjuguées des éléments de paroi (18, 19) à relier.

6. Dispositif selon l'une des revendications précédentes, **caractérisé en ce que** l'adaptateur de liaison (1) est réalisé comme une pièce séparée comprenant un corps de base (2) et un actionneur (3) du mécanisme de réglage qui peut être déplacé de manière linéaire sur ledit corps de base.

7. Dispositif selon la revendication 6, **caractérisé en ce que** l'actionneur (3) peut être réglé par actionnement d'un élément d'actionnement (9) monté mobile, en particulier par un actionnement sans outil et/ou manuel.

8. Dispositif selon l'une des revendications précédentes 6 ou 7, **caractérisé en ce qu'**il est prévu un mécanisme autobloquant pour fixer une position réglée de l'actionneur (3).

9. Dispositif selon l'une des revendications précédentes, **caractérisé en ce que** le mécanisme de réglage dispose d'un dispositif à excentrique avec lequel peuvent être réglées différentes positions de réglage du mécanisme de réglage.

10. Dispositif selon l'une des revendications précédentes, **caractérisé en ce que,** sur chacun des éléments de paroi (18, 19) à relier, il est prévu une section d'ancrage préparée (29-33) avec une section d'engagement dans laquelle les moyens d'engagement (20-24, 25-28) peuvent être ancrés, les sections d'engagement s'étendant dans une direction commune quand l'orientation des éléments de paroi (18, 19) est correctement positionnée pour la liaison.

11. Tiroir avec une paroi de tiroir constituée d'éléments de paroi (18, 19) reliés ensemble, la paroi de tiroir comprenant une paroi de façade, une paroi arrière et/ou au moins une paroi latérale, **caractérisé en ce qu'**il est prévu un dispositif selon l'une des revendications précédentes.

12. Tiroir selon la revendication 11, **caractérisé en ce que** les éléments de paroi (18, 19) sont reliés ensemble en mettant en butée bord à bord une face frontale d'un élément de paroi (19) contre une face principale d'un élément de paroi (18) adjacent.
